**Europäisches Patentamt**

**European Patent Office**

**Office européen des brevets**

(19)

(11) Veröffentlichungsnummer: **0 237 466**
**B1**

(12) # EUROPÄISCHE PATENTSCHRIFT

(45) Veröffentlichungstag der Patentschrift:
05.09.90

(51) Int. Cl.⁵: **H05K 3/34**

(21) Anmeldenummer: **87730021.0**

(22) Anmeldetag: **24.02.87**

(54) Lötmaschine.

(30) Priorität: **01.03.86 DE 3607089**

(43) Veröffentlichungstag der Anmeldung:
**16.09.87 Patentblatt 87/38**

(45) Bekanntmachung des Hinweises auf die Patenterteilung:
**05.09.90 Patentblatt 90/36**

(84) Benannte Vertragsstaaten:
**AT BE CH FR GB IT LI LU NL**

(56) Entgegenhaltungen:
**DE-A- 2 359 154**
**DE-A- 3 223 471**
**GB-A- 2 117 690**
**US-A- 3 058 441**

(73) Patentinhaber: **ERSA Ernst Sachs KG GmbH & Co.,**
**Leonhard-Karl-Strasse 24, D-6980 Wertheim / Main(DE)**

(72) Erfinder: **Gottschild, Wilfried, Dipl.-Ing.,**
**Caspar-Merian-Strasse 19, D-6980 Wertheim/Main(DE)**

(74) Vertreter: **Lüke, Dierck-Wilm, Dipl.-Ing.,**
**Gelfertstrasse 56, D-1000 Berlin 33(DE)**

**Beschreibung**

Die Erfindung bezieht sich auf eine Lötmaschine gemäß dem Oberbegriff des Anspruches 1.

Bei der gattungsgemäßen Lötmaschine kann das eine Führungsprofil seitlich oberhalb der Reihenanordnung von Fluxer, Vorheizung und Lötbad angeordnet sein, wohingegen das andere, verstellbare Führungsprofil oberhalb der Reihenanordnung von Fluxer, Vorheizung und Lötbad befindlich sein muß, um den Abstand zwischen den beiden Führungsprofilen an die Abmessungen der von den Lötfingern über Fluxer, Vorheizung und Lötbad zu führenden Leiterplatten anzupassen. Bei üblichen Lötmaschinen beträgt der Verstellweg des verstellbaren Führungsprofiles gegenüber dem festen Führungsprofil bis zu 400 mm.

Das verstellbare Führungsprofil wird beim Betrieb der Lötmaschine durch die Reihenanordnung von Fluxer, Vorheizung und Lötbad, insbesondere jedoch durch die Wärmeeinwirkung der Vorheizung, beträchtlich stärker erwärmt, als das im wesentlichen seitlich neben der Reihenanordnung von Fluxer, Vorheizung und Lötbad befindliche feste Führungsprofil. Diese stärkere Erwärmung des verstellbaren Führungsprofiles hat eine Verlängerung des verstellbaren Führungsprofiles zur Folge, welche sich in unterschiedlicher Hinsicht nachteilig auswirkt. Einerseits verändert sich die Laufgeschwindigkeit der um das verstellbare Führungsprofil herum geführten Umlaufkette, so daß eine nicht parallele Führung der Leiterplatten an den Lötfingern des festen und des verstellbaren Führungsprofiles auftritt, welche infolge der schrägen Lötung zu Fehlern der zu lötenden Kontaktverbindungen führt. Neben der unter Wärmeeinfluß erfolgenden Verformung der Lötfingerführung wirkt die Erwärmung andererseits nachteilig auf die seitliche Verstellung des verstellbaren Führungsprofiles ein. Diese Transportverstellung kann somit zum Klemmen neigen.

Der Erfindung liegt von daher die Aufgabe zugrunde, eine Lötmaschine der gattungsgemäßen Art so auszubilden, daß die auf die beiden Führungsprofile einwirkenden Temperaturen der Reihenanordnung von Fluxer, Vorheizung und Lötbad, insbesondere die Temperatur der Vorheizung, derart kompensiert werden, daß trotz erhöhter Temperatureinwirkung auf das verstellbare Führungsprofil keine Längenänderung des verstellbaren Führungsprofiles gegenüber dem festen Führungsprofil auftritt, so daß die Lötfingerführung synchron um beide Führungsprofile herum erfolgen kann, und daß eine gleichmäßige seitliche Verstellbarkeit des verstellbaren Führungsprofiles bei allen Temperaturbereichen sichergestellt ist.

Die Lösung dieser Aufgabe ergibt sich aus den kennzeichnenden Merkmalen des Anspruches 1. Durch die Verwendung von die längs verlaufenden Kühlmittelkanäle durchströmenden Kühlmittel, welches mittels mindestens einer Pumpeinrichtung umgewälzt wird, treten am verstellbaren Führungsprofil auch bei unterschiedlicher Erwärmung gegenüber dem festen Führungsprofil keine Längenänderungen auf, so daß synchrone Umläufe der Umlaufketten und damit der Lötfinger erfolgen. Auch wird die seitliche Verstellbarkeit des verstellbaren Führungsprofiles nicht behindert, da es infolge der Kühlung des verstellbaren Führungsprofiles nicht mehr zu Verklemmungen der seitlichen Transportverstellung für das verstellbare Führungsprofil kommt.

Weitere vorteilhafte Ausgestaltungen der Erfindung ergeben sich aus den Unteransprüchen. Hingewiesen wird insbesondere auf die Möglichkeit des Anschlusses der Kühlmittelkanäle an ein 1-Kreislaufsystem oder ein 2-Kreislaufsystem, wobei durch geeignete Führung des Kühlmittelstroms in Relation zur Transportrichtung eine gezielte Kühlung möglich ist.

Die Erfindung ist nachfolgend anhand mehrerer, in den Zeichnungen dargestellter Ausführungsbeispiele näher erläutert. Es zeigen:

Fig. 1 eine Draufsicht auf die Lötmaschine mit einem 1-Kreislaufkühlsystem,

Fig. 2 eine Draufsicht auf die Lötmaschine mit einem 1-Kreislaufkühlsystem mit Zwischenkühl-Behälter,

Fig. 3 eine Draufsicht auf die Lötmaschine mit einem 2-Kreislaufkühlsystem,

Fig. 4 einen Schnitt durch eine Führungsbahn mit zwei parallel verlaufenden Kühlmittelkanälen,

Fig. 5 eine Seitenansicht der um die Führungsprofile umlaufenden Lötfinger,

Fig. 6 einen Querschnitt durch ein Führungsprofil mit einem längsverlaufenden Kühlmittelkanal und

Fig. 7 im Prinzip dargestellte Querschnitte durch das Führungsprofil mit unterschiedlich ausgebildeten Kühlmittelkanälen.

Die Lötmaschine umfaßt auf einem nicht näher dargestellten Basisgestell in Transportrichtung gemäß Pfeil X hintereinander einen Fluxer 1, eine mehrstufige Vorheizung 2 sowie ein Lötbad 3. Seitlich oberhalb von Fluxer 1, Vorheizung 2 und Lötbad 3 ist ein mit dem Grundgestell in nicht näher dargestellter Weise fest verbundenes Führungsprofil 4 angeordnet. Parallel zum Führungsprofil 4 ist in gleicher Höhe oberhalb von Fluxer 1, Vorheizung 2 und Lötbad 3 ein verstellbares Führungsprofil 5 angeordnet. Dieses ist in Richtung der Pfeile Y einstellbar. Der Abstand zwischen dem festen Führungsprofil 4 und dem verstellbaren Führungsprofil 5 beträgt üblicherweise bis zu 400 mm.

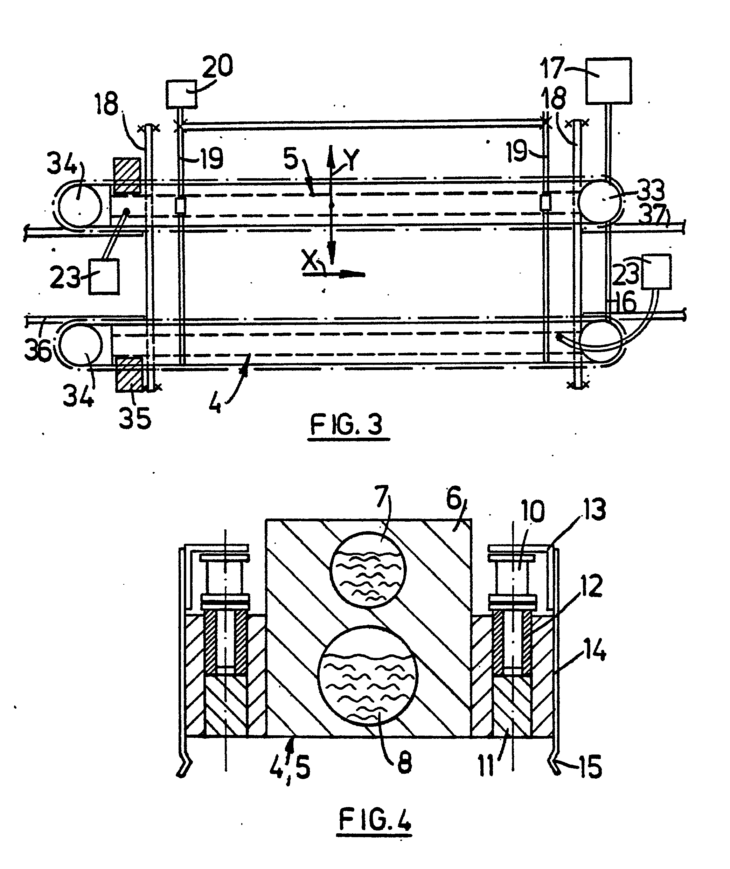

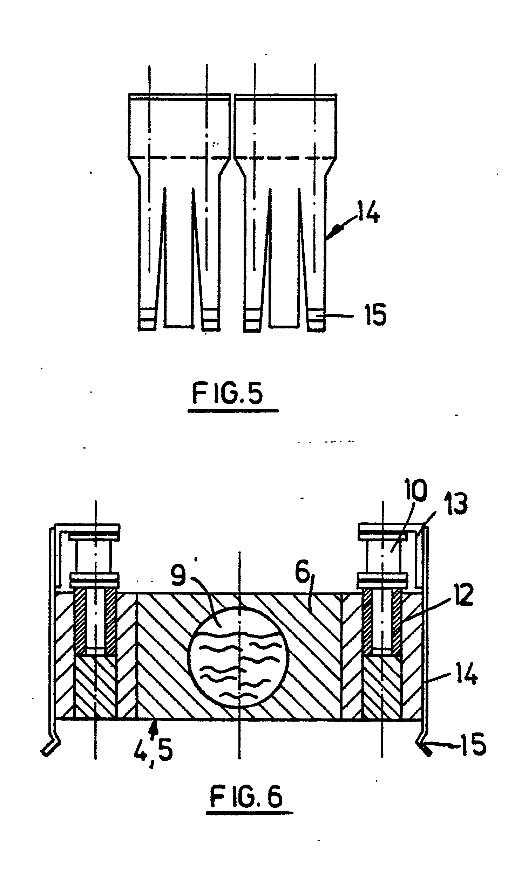

Wie es die Fig. 4 und 6 im Querschnitt durch ein Führungsprofil 4,5 zeigen, besteht das Führungsprofil 4,5 aus einem im Querschnitt etwa rechteckigen Profilstab 6, der im Ausführungsbeispiel gemäß Fig. 4 mit zwei im Querschnitt kreisförmigen Kühlmittelkanälen 7, 8 und im Ausführungsbeispiel gemäß Fig. 6 mit einem einzigen Kühlmittelkanal 9 versehen ist. Alle Kühlmittelkanäle 7 bis 9 erstrecken sich in Längsrichtung durch den Profilstab 6 der Führungsprofile 4,5.

Um die Profilstäbe 6 herum sind Umlaufrollenketten 10 geführt. Hierzu sind U-förmige Führungen 11 seitlich an den Profilstäben 6 angebracht, wobei im Innenraum der U-Form Führungsbuchsen 12 der Umlaufrollenketten 10 geführt sind. Diese laufen mit vertikaler Achse in der Ebene oberhalb der Reihenanordnung von Fluxer 1, Vorheizung 2 und Lötabd 3 um den Profilstab 6 herum. Am oberen Ende tragen die Umlauf-Rollenketten 10 Winkellaschen 13, an welche Lötfinger 14 angeschraubt oder angenietet sind. In nicht näher dargestellter Weise können die Lötfinger 14 auch gegenüber der Umlauf-Rollenkette 10 hochklappbar ausgebildet sein.

Die in Fig. 5 in einer Vorderansicht gezeigten Lötfinger 14 tragen an ihrer Unterseite L-förmige Abwinklungen 15, die derart gestaltet sind, daß die Lötfinger 14 der auf den zueinander gerichteten Seiten der beiden Führungsprofile 4,5 umlaufenden Lötfinger 14 zwischen sich Leiterplatten zum Transport über die Reihenanordnung von Fluxer 1, Vorheizung 2 und Lötbad 3 führen können.

Die Umlauf- Rollenketten 10 der beiden Führungsprofile 4,5 sind gemeinsam über eine Antriebswelle 16 von einem Motor 17 angetrieben, wobei die Antriebswelle 16 als Keilwellenprofil ausgebildet ist, auf welchem ein entsprechendes Gegenprofil zur Verstellbarkeit des Führungsprofiles 5 gleitbar ist. Das Führungsprofil 5 selbst ist auf Führungsbahnen 18 geführt und mittels Verstellantrieben 19 von einem Antriebsmotor 20 aus verstellbar. Die nähere Ausgestaltung der Bauteile 16 bis 20 ist nicht näher dargestellt.

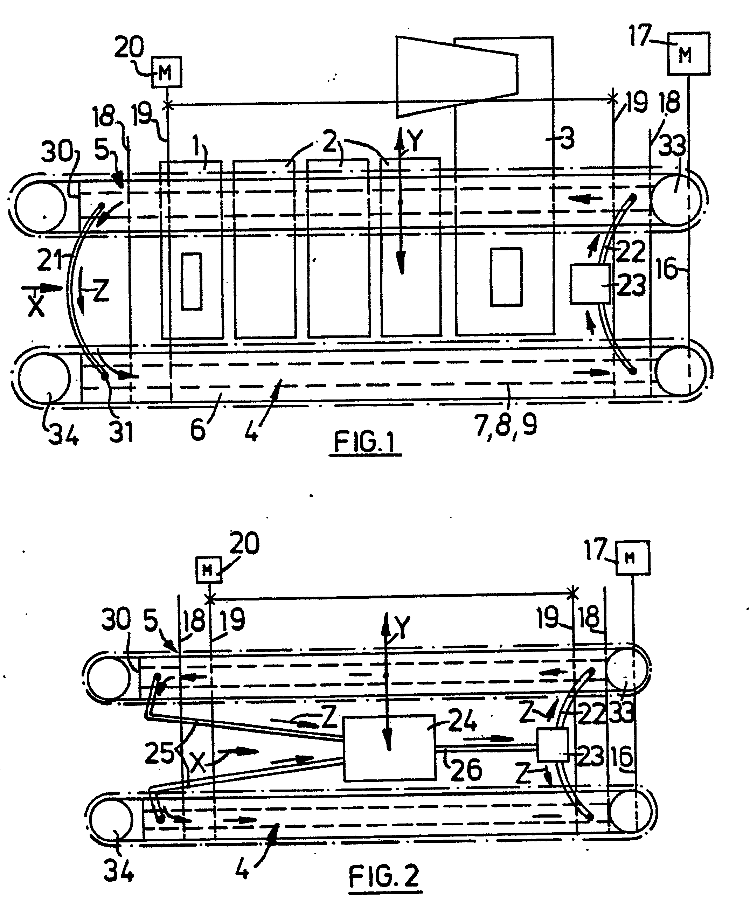

Um eine größere Erwärmung des verstellbaren Führungsprofiles 5, das oberhalb der Reihenanordnung der Fluxer 1, Vorheizung 2 und Lötbad 3 beweglich geführt ist, gegenüber dem seitlich oberhalb der Reihenanordnung festangebrachten Führungs profil 4 zu vermeiden, sind innerhalb der Profilstäbe 6 der Führungsprofile 4,5 die Kühlmittelkanäle 6 bis 9 vorgesehen. In dem Ausführungsbeispiel gemäß Fig. 1 ist im Profilstab 6 ein Kühlmittelkanal 9 gemäß Fig. 6 ausgebildet. Hierzu sind die Kühlmittelkanäle 9 an beiden Enden der Führungsprofile 4,5 über Verbindungsschläuche 21, 22 miteinander verbunden, wobei in den Verbindungsschlauch 22 eine Kühlmittelpumpe 23 eingeschaltet ist. Es wird ein Ein- Kreislauf- Kühlsystem gebildet, wobei der Umlauf des Kühlmittels durch Pfeile Z dargestellt ist.

In dem Ausführungsbeispiel gemäß Fig. 2 sind ebenfalls Profilstäbe 6 mit einem Kühlmittelkanal 9 gemäß Fig. 6 vorgesehen. An die Kühlmittelkanäle 9 sind an beiden Enden der Führungsprofile 4,5 Verbindungsschläuche 22, 25 angeschlossen. Die Verbindungsschläuche 22 sind mit der Pumpe 23 verbunden, welche wiederum mit einem Behälter 24 für Kühlmittel über einen weiteren Verbindungsschlauch 26 verbunden ist. Die beiden Verbindungsschläuche 25 sind an den Behälter 24 auf der der Pumpe 23 abgewandten Seite angeschlossen. Somit werden jeweils Teilströme des Kühlmittels von der Pumpe 23 in Richtung der Pfeile Z durch die Verbindungsschläuche 22 den Kühlmittelkanälen 9 zugeführt. An deren Ende tritt das erwärmte Kühlmittel über die Verbindungsschläuche 25 aus und wird dem Behälter 24 wieder zugeführt, von dem das Kühlmittel über den Verbindungsschlauch 26 der Pumpe 23 zugeführt wird. Es wird somit ein Zwei-Kreislauf-Kühlsystem gebildet, das lediglich die gemeinsame Pumpe 23, den gemeinsamen Behälter 24 für Kühlmittel und die gemeinsame Verbindungsleitung 26 enthält.

Im Ausführungsbeispiel gemäß Fig. 3 sind Profilstäbe 6 mit zwei Kühlmittelkanälen 7, 8 vorgesehen, wie es im Querschnitt in Fig. 4 dargestellt ist. Die beiden Kühl mittelkanäle eines jeden Führungsprofiles 4,5 sind zu jeweils einem Kühlmittelkreislauf zusammengeschlossen. Jedem Kühlmittelkreislauf ist je eine Pumpe 23, 23' zugeordnet. Hierbei wird ein 2-Kreislauf-Kühlsystem gebildet.

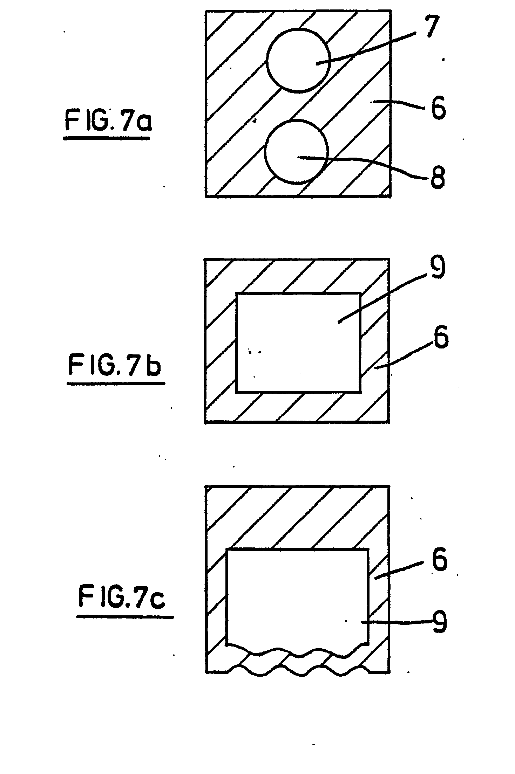

Die Fig. 7 zeigt Querschnitte durch unterschiedlich ausgebildete Profilstäbe 6 der beiden Führungsprofile 4,5. In Fig. 7a sind gemäß Fig. 4 zwei übereinander angeordnete Kühlmittelkanäle 7, 8 von kreisrundem Querschnitt angeordnet. Im Profilstab 6 gemäß Fig. 7b ist ein im Querschnitt rechteckiger Kühlmittelkanal 9 vorgesehen. Im Profilstab 6 gemäß Fig. 7c ist der eine Kühlmittelkanal 9 bodenseitig mit in Längsrichtung des Profilstabes verlaufenden Wellen ausgebildet. Hierdurch soll die Kühloberfläche im Innern des Profilstabes 6 vergrößert werden.

Die Enden der Kühlmittelkanäle 6 bis 9 sind durch Dichtungen verschlossen . Die Verbindungsschläuche 21 und 22 sind mittels nach unten abgehender Anschlußstücke 31 mit den Kühlmittelkanälen verbunden . Die Umlauf-Rollenketten 10 laufen an den Enden der Führungsprofile 4,5 um Umlenkräder 33 ,34 herum . Auf der jeweiligen Außen - oder Rücklaufseite der Umlaufrollenketten 10 sind Kettenwaschvorrichtungen 35 installiert ( Fig. 3 ) . Beidseits der Lötmaschine schließen Einlauf- bzw. Auslaufschienen 36 bzw. 37 an die auf der Innen- oder Lötseite der Führungsprofile 4,5 an (Fig.3) .

Bei der erfindungsgemäßen Lötmaschine treten somit am verstellbaren Führungsprofil 5 auch bei unterschiedlicher Erwärmung gegenüber dem festen Führungsprofil 4 weder Längenänderungen noch Durchbiegungen auf, so daß die Lötfinger 14 jedes Führungsprofils 4,5 in gleicher Höhe bzw. in gleichem Abstand über die Lötmaschine geführt werden.

**Patentansprüche**

1. Lötmaschine mit zwei parallel zueinander oberhalb einer Reihenanordnung von Fluxer, Vorheizung und Lötbad angeordneten Führungsprofilen für mit Lötfingern versehene Umlaufketten, wobei ein Führungsprofil fest und das andere Führungsprofil verstellbar gelagert ist und wobei die Lötfinger beider Umlaufketten zwischen sich Leiterplatten über die Reihenanordnung von Fluxer, Vorheizung und Lötbad führen,
dadurch gekennzeichnet,
daß jedes Führungsprofil (4, 5) mit mindestens einem längsverlaufenden Kühlmittelkanal (6 bis 9) versehen ist und daß jeder Kühlmittelkanal (6 bis 9 ) mit einer Pumpeinrichtung (23,23') für ein Kühlmittel verbunden ist.

2. Lötmaschine nach Anspruch 1, dadurch gekennzeichnet, daß die Kühlmittelkanäle (6 bis 9) an beiden Enden der Führungsprofile (4, 5) miteinander durch Verbindungsleitungen (21, 22 ) verbunden sind und daß in eine der Verbindungsleitungen (22) eine Pumpe (23) eingeschaltet ist.

3. Lötmaschine nach Anspruch 2, dadurch gekennzeichnet, daß die Pumpe (23) mit der anderen Verbindungsleitung (21) über Zuführungs- und Abführungsleitungen (25, 26) mit einem Behälter (24) für Kühlmittel verbunden ist.

4. Lötmaschine nach einem der Ansprüche 1 bis 3, dadurch gekennzeichnet, daß in jedem Führungsprofil (4, 5) zwei, einen geschlossenen Kreislauf bildende Kühlmittelkanäle (7, 8) vorgesehen sind und daß jedem Kühlmittelkreislauf eine Kühlmittelpumpe (23, 23') zugeordnet ist.

5. Lötmaschine nach einem der Ansprüche 1 bis 4, dadurch gekennzeichnet, daß die Kühlmittelkanäle (7 bis 9) im Querschnitt kreisförmig ausgebildet sind.

6. Lötmaschine nach einem der Ansprüche 1 bis 5, dadurch gekennzeichnet, daß der Kühlmittelkanal (9) im Führungsprofil (4, 5) im Querschnitt etwa rechteckig ist und daß der Boden des Kühlmittelkanals (9) mit in Längsrichtung des Führungsprofiles (4, 5) verlaufenden wellenförmigen Erhebungen versehen ist .

## Claims

1. A soldering machine having two guide sections for circulating chains provided with soldering fingers, said guide sections being arranged in parallel to each other above a series arrangement of fluxer, pre-heater and soldering bath, and one of said guide sections being supported stationarily and the other guide section being supported displaceably, and the soldering fingers of both circulating chains transport therebetween printed-circuit boards over the series arrangement of fluxer, pre-heater and soldering bath, characterised by that each guide section (4, 5) is provided with at least one longitudinally extending coolant channel (6 to 9), and that each coolant channel (6 to 9) is connected to a pump device (23, 23') for a coolant.

2. A soldering machine according to claim 1, characterised by that the coolant channels (6 to 9) are connected to each other at both ends over connecting lines (21, 22), and that a pump (23) is included in one of the connecting lines (22).

3. A soldering machine according to claim 2, characterised by that the pump (23) is connected to the other connecting line (21) over feed and discharge lines (25, 26) with a container (24) for a coolant.

4. A soldering machine according to one of claims 1 to 3, characterised by that in each guide section (4, 5) are provided two coolant channels (7, 8) forming a closed cycle, and that to each coolant cycle is assigned a coolant pump (23, 23').

5. A soldering machine according to one of claims 1 to 4, characterised by that the coolant channels (7 to 9) have a circular cross section.

6. A soldering machine according to one of claims 1 to 5, characterised by that the coolant channel (9) has in the guide section (4, 5) an approximately rectangular cross section, and that the bottom of the coolant channel (9) is provided with wave-type elevations extending in longitudinal direction of the guide section (4, 5).

## Revendications

1. Machine de soudage comportant deux profilés de guidage pour des chaînes circulantes pourvues de doigts de soudage, lesdits profilés de guidage étant disposés au-dessus d'un ensemble en série de fluxer, chauffage préliminaire et bain de soudage, un profilé de guidage étant logé stationnairement et l'autre profilé de guidage étant logé déplaçablement, et les doigts de soudage des deux chaînes circulantes guidant entre eux-mêmes des cartes imprimés sur l'ensemble en série de fluxer, chauffage préliminaire et bain de soudage, caractérisée en ce que chaque profilé de guidage (4, 5) est pourvu d'au moins un canal de réfrigérant (6 à 9) s'étendant longitudinalement, et que chaque canal de réfrigérant (6 à 9) est raccordé à un dispositif de pompage (23, 23') pour un réfrigérant.

2. Machine de soudage selon la revendication 1, caractérisée en ce que les canaux de réfrigérant (6 à 9) sont raccordés l'un à l'autre aux deux extrémités des profilés de guidage (4, 5) par l'intermédiaire de conduites de connexion (21, 22), et qu'une pompe (23) est insérée dans une des conduites de connexion (22).

3. Machine de soudage selon la revendication 2, caractérisée en ce que la pompe (23) est raccordée à l'autre conduite de connexion (21) par l'intermédiaire de conduites d'amenée et de décharge (25, 26) à un conteneur (24) pour réfrigérant.

4. Machine de soudage selon une des revendications 1 à 3, caractérisée en ce que dans chaque profilé de guidage (4, 5) sont prévus deux canaux de réfrigérant (7, 8) formant un circuit fermé, et qu'à chaque circuit de réfrigérant est adjointe une pompe de réfrigérant.

5. Machine de soudage selon une des revendications 1 à 4, caractérisée en ce que les canaux de réfrigérant (7 à 9) ont une circulaire section transversale.

6. Machine de soudage selon une des revendications 1 à 5, caractérisée en ce que le canal de réfrigérant (9) a dans le profilé de guidage (4, 5) une environ rectangulaire section transversale, et que le fond du canal de réfrigérant (9) est pourvu d'élévations ondulées s'étendant en direction longitudinale du profilé du guidage (4, 5).

FIG.1

FIG.2

FIG. 3

FIG.4

## FIG.5

14

15

## FIG. 6

10 13

9 6

12

14

4,5

15

FIG.7a

7

6

8

FIG.7b

9

6

FIG.7c

6

9